# EUROPEAN PATENT SPECIFICATION

(11) **EP 0 276 985 B1**
(45) Date of publication and mention of the grant of the patent: **17.08.1994**
(21) Application number: 88300642.1
(22) Date of filing: 26.01.1988
(51) Int. Cl.: H04N 5/44

(54) **Video processing**
Videoverarbeitung
Traitement vidéo

(30) Priority: 27.01.1987 GB 8701770
(43) Date of publication of application: 03.08.1988
(73) Proprietor: Ferguson Limited, Enfield Middlesex, EN1 1UL (GB)
(72) Inventor: Walton, David William, Otley West Yorkshire, LS21 1HU (GB)
(74) Representative: Einsel, Robert, Dipl.-Ing.

(56) References cited:
- WO-A-86/05644

## Description

The present invention relates to a method for transmitting a widescreen television signal and of selecting a section of said widescreen television signal in a non-widescreen television receiver.

WO-A-86/05644 describes a method of displaying a selected portion of a wide aspect ratio TV signal on a standard aspect display. An operator manually selects the center of interest and causes a signal to be generated which is transmitted with the picture. If no selection signal is transmitted the decoder will generate a default selection signal.
However, there is picture content on which a continuous manual selecting is difficult. In addition, a decoder generated default signal may not represent the optimum center position.

It is an object of the invention to improve the section selection. This object is reached by the method disclosed in claim 1.

Advantageous additional embodiments of the inventive method are resulting from the respective dependent claims.

An embodiment of the present invention involves a television receiver comprising circuitry which comprises means to decode a transmitted video signal, means to effect aspect-ratio processing on the transmitted video signals such as to provide a display with an aspect-ratio different to that of the video signal in, the format as transmitted, the aspect-ratio processing means being responsive to a section in the transmitted video signals for containing aspect-ratio data.

Preferably, the receiver comprises means to handle a video signal whereby in that part of the video signal corresponding to a picture as transmitted, the aspect-ratio data section indicates that portion of the picture which is to be displayed. Thus for example, the section may indicate the start for that picture when displayed in the different aspect-ratio. There may be some form of indication at the end of the section signifying the finish of the picture when displayed in the different aspect-ratio, and/or the end may be defined by a specific interval after the start, and/or the section may indicate what the interval is in that instance (thereby enabling there to be different aspect-ratios).

The aspect-ratio data section may indicate that portion, for display, of a predetermined number of adjacent (preferably subsequent) pictures; thus for example, a section may indicate what portion of the next ten pictures is to be used. Alternatively or additionally, the aspect-ratio data section may indicate that portion, for display, of a number, specified in the video signal, of adjacent (preferably subsequent) pictures; the relevant number may be specified by the section stating that number of pictures to which it relates, or it may be specified by the content of that section being used until such time as there arrives another section which indicates that it is to replace the present one.

Preferably, the circuitry is in integrated circuit format. Advantageously the aspect-ratio processing means is incorporated in an integrated circuit which is separate from the decoding means. Accordingly, the aspect-ratio processing means may be incorporated in an aspect-ratio conversion unit which is physically separate from, but electrically connected to, the television receiver, for example the unit may sit next to or on the receiver.

Preferably, the receiver comprises means to effect the display of a predetermined (e.g. average or central) portion of the picture when the processing means is effecting no other form of selective display of the video signal as transmitted. Advantageously, the receiver has circuitry to define what is the predetermined portion; that circuitry may be capable of effecting different predetermined portions as required.

Preferably, the television receiver comprises externally generated clocking means and means to effect line blocking of the clocking means.

The present invention also embodies equipment incorporating the principle features defined herein in order to modify a conventional television receiver to one embodying the present invention. Also the present invention embodies a method of processing in accordance with the features defined herein.

Thus, the embodiment of present invention also involves an aspect-ratio conversion unit for use with a television receiver, the unit comprising means to effect aspect-ratio processing on transmitted video signals such as to provide a display with an aspect-ratio different to that of the video signal in the format as transmitted, the aspect-ratio processing means being responsive to a section in the transmitted video signals for containing aspect-ratio data.

Preferably the unit comprises means to handle a video signal whereby, in that part of the video signal corresponding to a picture as transmitted, the aspect-ratio data section indicates that portion of the picture which is to be displayed.

The present invention provides a method as claimed in claim 1.

Preferably, the method comprises handling a video signal whereby in that part of the video signal corresponding to a picture as transmitted, the aspect-ratio data section indicates that portion of the picture which is to be displayed.

Thus, the present invention may provide a technique for processing video signals having a wide aspect-ratio format, such that they can thereafter be used in a display of a normal aspect-ratio format. The present invention is particularly applicable to video signals broadcast according to the MAC standard.

In the present invention, line stores are used to extract standard aspect-ratio information from wide aspect-ratio transmitted picture information including use of aspect-ratio data sections, for example pan vectors.

The present invention provides expansion of part of a received MAC type picture so that a dual standard transmission/reception system is compatible when a set-top signal decoder is used with a standard aspect-ratio monitor device.

The part of the picture information to be displayed may be defined by a "pan vector" (a read-out start pointer which typically may vary between individual pictures or groups of pictures) or by a fixed value vector (which typically is constant) indicating use of the centre portion for instance. Preferably the invention requires the transmission by the broadcasters of this pan vector with wider aspect-ratio picture information, but could extract any fixed portion without this information.

The internal time decompression circuits of a decoder unit may be modified to accept the necessary output clock rate. Alternatively if the decoder unit is only capable of decoding the complete picture a separate module could be used on the component video output (RGB or YUV) from the decoder unit using an externally generated clock which must be line locked for read out.

Equipment embodying the present invention may be incorporated within a television receiver in order to provide a normal aspect-ratio display from a wide aspect-ratio format signal as broadcast. The television receiver may be dedicated to operation of the equipment for all reception of wide aspect-ratio format signals, or the receiver may have a user-operable switch to actuate operation of the equipment when desired.

In order that the invention may more readily be understood, a description is now given, by way of example only, reference being made to the accompanying drawings, in which:-
Figure 1 is a block diagram of a system embodying the present invention;
Figure 2 is a schematic diagram of the system of Figure 1;
Figure 3 is a block diagram of another system embodying the present invention;
Figures 4 and 5 are schematic diagrams, for RGB and YUV options respectively, of the system of Figure 3.

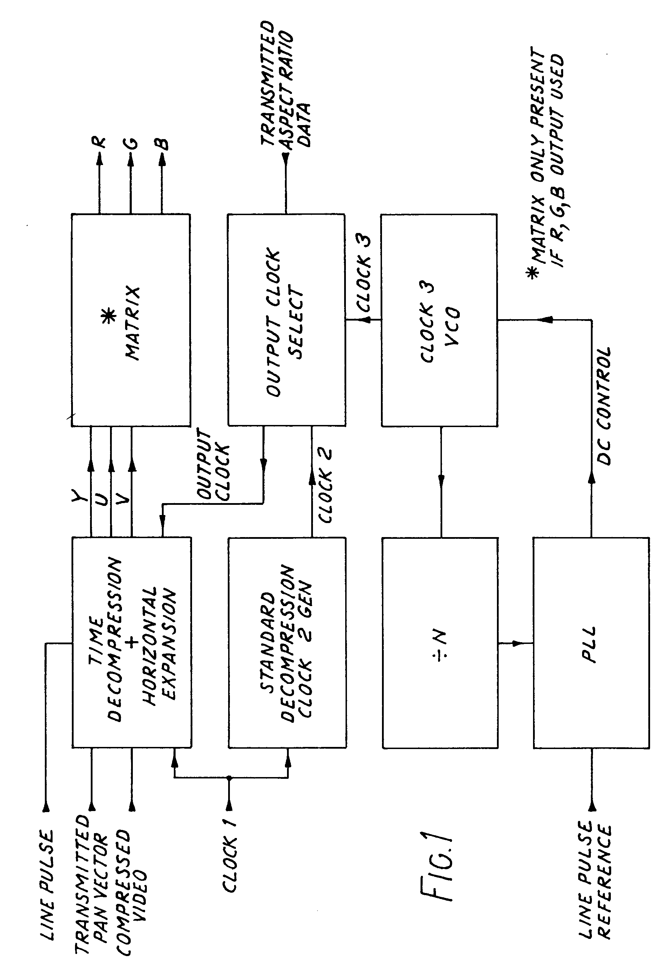

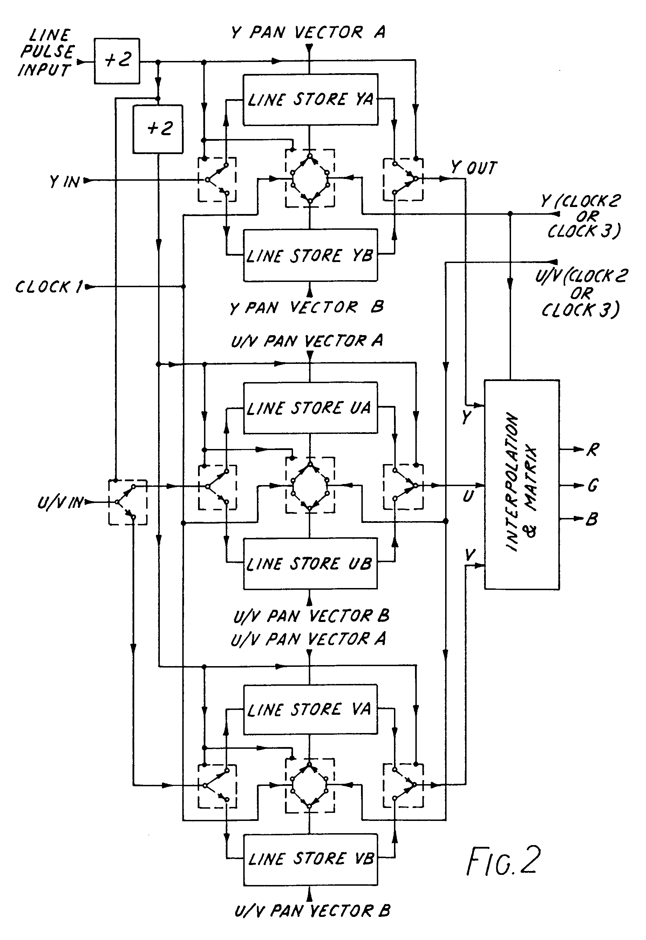

Figure 1 shows a conceptual block diagram of a system using internally modified decompression units, while Figure 2 gives detail of the required internal schematic diagram.

The line stores may be of the analogue (CCD) or the digital type made up of analogue to digital converters (ADC), digital RAM or FIFO and digital to analogue converter (DAC). The two sets of stores will be referred to by suffix A or B.

The relative Y and U/V output clock rates (clock 2 or clock 3) are related, inter alia, to the compression ratio.

The effect on recovered video bandwidth is a reduction of the standard signal by the factor clock 3:clock 2.

With reference to Figure 2, during the sequence the compressed video is read into line stores A (pan vector is set to the start of the store), during the luma (Y) part of the input line for the Y start and the appropriate U or V (colour difference) signal during the U/V part of the line, using clock 1. Simultaneously stores B are being read out over the full line period at either the standard (clock 2), or expansion (clock 3), frequency depending upon the transmitted aspect-ratio information. The Y stores are switched at half line rate, and the U/V stores at quarter line rate, the outputs of the U and V being interpolated before matrixing. This sequence occurs over four lines. Initialisation is again a field blanking.

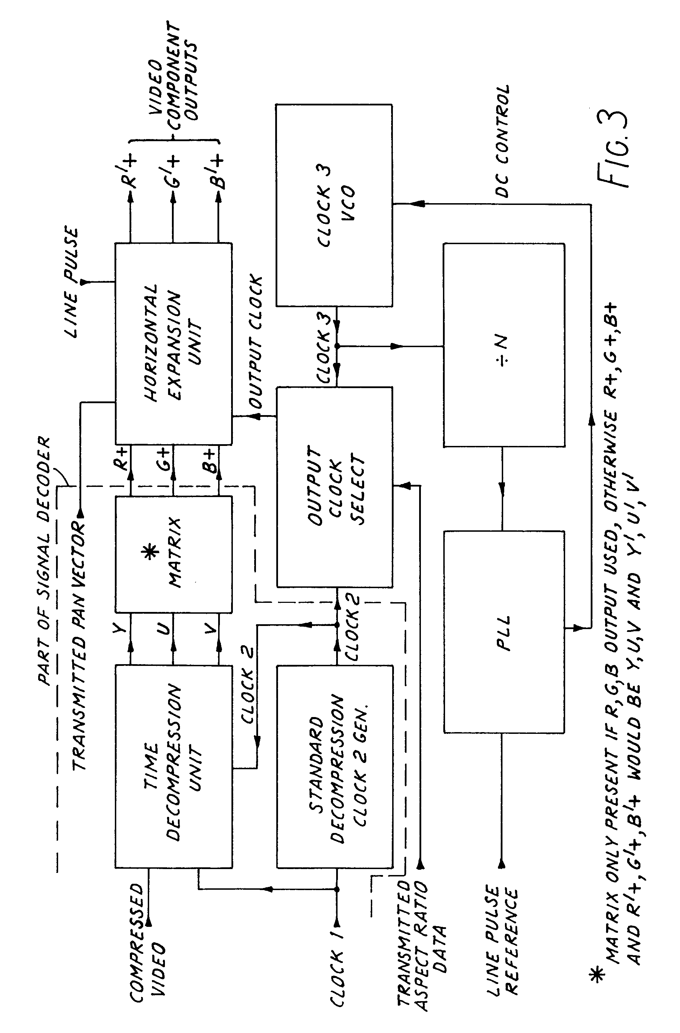

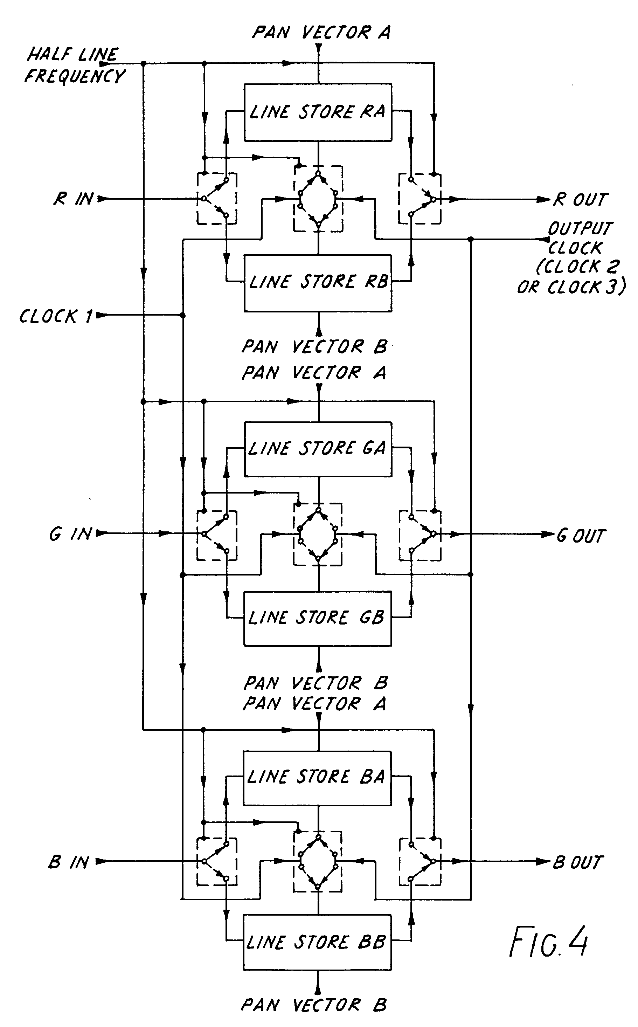

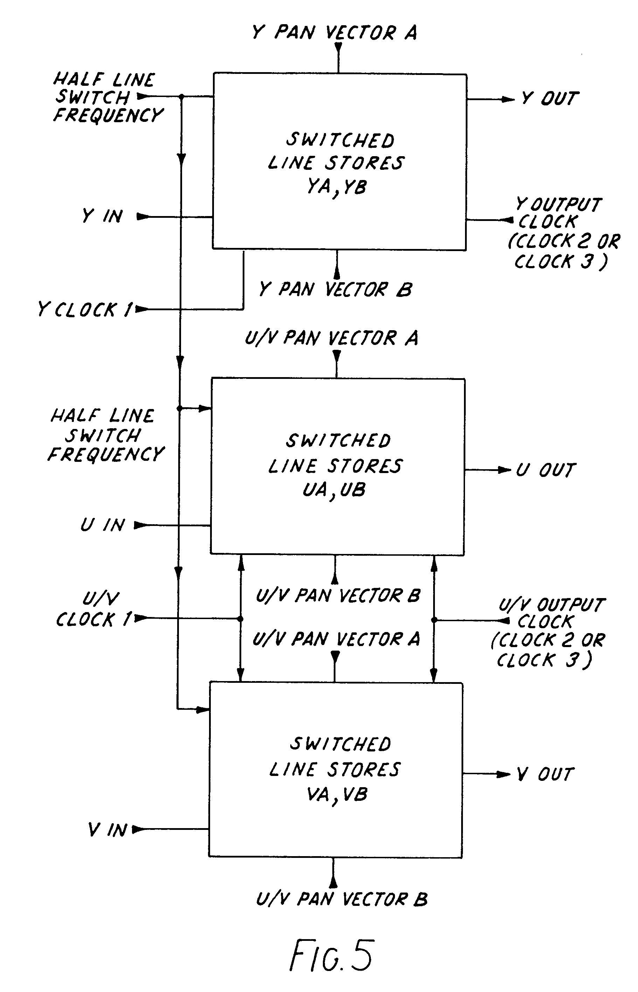

Figure 3 shows a conceptual block diagram of a system using additional expansion units suited for an aspect-ratio conversion unit which is electrically connectable with, but remaining physically distinct from, the television receiver itself. Figures 4 and 5 give more schematic detail for external RGB/YUV options.

With reference to the RGB option shown in Figure 4, the signal is read into line stores RA, GA, BA (pan vector A set to the start of the store) using clock 1 while line stores RG, GB, BB are being read using pan vector B as start address and clock 3 as the output clock. Clock 2 is selected as an output clock if the aspect-ratio information does not indicate a wide aspect-ratio transmission. The line stores are switched at half line rate so that stores RA, GA, BA are now read out, while RB, GB, BB are rewritten. Pan vector is now set to the start of the RAM/FIFO of the line start and pan vector A is set for the start of the expansion period. The sequence is again switched back on following alternate lines. The addressing is initialised at field blanking.

With reference to the YUV option shown in Figure 5, this differs from the previous description primarily in that YUV is used instead of RGB. The line start is switching still at half line rate and initialisation is still at field blanking.

## Claims

1. Method of transmitting a widescreen television signal and of selecting a section of said widescreen television signal in a non-widescreen television receiver so as to evaluate said section without geometric distortion in said non-widescreen television receiver, wherein information indicating the location of said section within said widescreen television signal is transmitted as a part of said widescreen television signal, **characterised in** that said information is a pan vector which is relevant for each predetermined group of adjacent pictures or that said information contains a pan vector and states the number of pictures to which it relates.

2. Method according to claim 1, **characterised in** that said information - especially said pan vector - is relevant for all subsequently transmitted pictures until such time as there arrives an update of said information which replaces the present one.

3. Method according to claim 1 or 2, **characterised in** that said information - especially said pan vector - indicates the begin and the end of said section, thereby enabling the evaluation of different aspect ratios.

## Patentansprüche

1. Verfahren zur Sendung eines Breitwandfernsehsignales und Auswahl eines Ausschnittes des genannten Breitwandfernsehsignales in einem Fernsehempfänger ohne breiten Bildschirm derart, daß dieser Ausschnitt ohne geometrische Verzerrung im Fernsehempfänger ohne breiten Bildschirm ausgewertet wird, wobei Information, die die Stelle dieses Ausschnittes im Breitwandfernsehsignal angibt, als Teil dieses Breitwandfernsehsignales gesendet wird, dadurch gekennzeichnet, daß diese Information ein Pan-Vektor ist, der für jede vorbestimmte Gruppe aufeinanderfolgender Bilder gilt, oder daß diese Information einen Pan-Vektor enthält und die Anzahl der Bilder angibt, auf die er sich bezieht.

2. Verfahren nach Patentanspruch 1, dadurch gekennzeichnet, daß die genannte Information - insbesondere der Pan-Vektor - für alle folgenden Bilder gilt, bis zu dem Zeitpunkt, an dem eine neue Information ankommt, die die vorliegende ersetzt.

3. Verfahren nach Patentanspruch 1 oder 2, dadurch gekennzeichnet, daß die genannte Information - insbesondere der Pan-Vektor - den Anfang und das Ende des genannten Ausschnittes angibt und dadurch die Auswertung verschiedener Bildformate erlaubt.

## Revendications

1. Procédé de transmission d'un signal de télévision grand écran et de sélection d'une section du signal de télévision grand écran dans un récepteur de télévision qui n'est pas grand écran de manière à évaluer ladite section sans distorsion géométrique dans ledit récepteur de télévision qui n'est pas grand écran, dans lequel l'information qui indique l'emplacement de ladite section à l'intérieur du signal de télévision grand écran est transmise comme étant une partie du signal de télévision grand écran, **caractérisé en ce** que ladite information est un vecteur panoramique qui est pertinent pour chaque groupe prédéterminé d'images adjacentes ou que ladite information contient un vecteur panoramique et spécifie le nombre d'images qu'il concerne.

2. Procédé selon la revendication 1, **caractérisé en ce** que ladite information - en particulier ledit vecteur panoramique - est pertinente pour toutes les images transmises par la suite jusqu'au moment où il arrive une actualisation de ladite information qui remplace l'information présente.

3. Procédé selon la revendication 1 ou 2, **caractérisé en ce** que ladite information - en particulier ledit vecteur panoramique - indique le début et la fin de ladite section en permettant ainsi l'évaluation de différents formats d'image.
